# EUROPÄISCHE PATENTANMELDUNG

(11) **EP 1 785 245 A1**
(43) Veröffentlichungstag der Anmeldung: **16.05.2007**
(21) Anmeldenummer: 05028678.0
(22) Anmeldetag: 29.12.2005
(51) Int. Cl.: B28C 5/02, C04B 40/02, B28C 7/12

(54) **Verfahren zur Regelung der Kohlendioxideinspeisung in Anmachwasser für Spritzbeton**

(30) Priorität: 10.11.2005 DE 102005053729
(71) Anmelder: Linde Aktiengesellschaft, 65189 Wiesbaden (DE)
(72) Erfinder: Buinger, Alexander, 81476 München (DE); Kimbacher, Alfred, 4591 Molln (AT); Rebhan, Dieter, 82538 Geretsried-Gelting (DE); Schmand, Ralf, 85716 Unterschleißheim (DE); Werthmann, Eckart, 6423 Mötz (AT)

(57) **Zusammenfassung**

Die Erfindung betrifft ein Verfahren zum Trocken- oder Feuchtspritzen von zementhaltigen Stoffen, insbesondere Spritzbeton, wobei Zement und Anmachwasser einer Spritzdüse zugeführt und gemischt werden und der entstehende Spritzbeton verspritzt wird, wobei dem Anmachwasser Kohlendioxid zugesetzt wird und der Druck des Anmachwässers stromaufwärts der Spritzdüse mittels einer Pumpe erhöht wird. Erfindungsgemäß wird die Menge des dem Anmachwasser pro Zeiteinheit zugesetzten Kohlendioxids in Abhängigkeit von Temperatur, Druck und / oder Menge des der Spritzdüse pro Zeiteinheit zugeführten Anmachwassers geregelt wird.

## Beschreibung

Die Erfindung betrifft ein Verfahren zum Trocken- oder Feuchtspritzen von zementhaltigen Stoffen, insbesondere Spritzbeton, wobei Zement und Anmachwasser einer Spritzdüse zugeführt und gemischt werden und der entstehende Spritzbeton verspritzt wird, wobei dem Anmachwasser Kohlendioxid zugesetzt wird und der Druck des Anmachwassers stromaufwärts der Spritzdüse mittels einer Pumpe erhöht wird.

Spritzbeton wird häufig als erste Sicherungsmaßnahme und als Endausbau im Tunnel-oder Stollenbau und für Baugrubenwände eingesetzt. In Abhängigkeit von dem der Spritzmaschine zugegebenen Gemisch unterscheidet man zwischen Nass- und Trockenspritzverfahren. Beim Trockenspritzverfahren wird Zement, gegebenenfalls gemischt mit trockenen oder feuchten Zuschlagstoffen und Abbindebeschleunigern, von der Spritzmaschine mit Druckluft zur Spritzdüse gefördert. Als Feuchtspritzverfahren bezeichnet man Verfahren, bei denen feuchte Zuschlagstoffe zugegeben werden. In der Spritzdüse wird der Zement bzw. das Gemisch aus Zement und Zuschlagstoffen und Abbindebeschleunigern mit Anmachwasser gemischt und auf den zu bearbeitenden Untergrund gespritzt. Häufig werden die Zuschlagstoffe auch nicht dem Zement, sondern dem Anmachwasser zugesetzt.

Im Vergleich zu anderen Betonarten muss Spritzbeton besonders schnell erstarren und rasch an Festigkeit zunehmen, damit die aufgespritzten Spritzbetonschichten nicht aufgrund ihres Eigengewichts von dem Objekt herunterfallen. Im Tunnelbau müssen die Spritzbetonschichten bereits nach relativ kurzer Zeit Erschütterungen von Sprengungen widerstehen können.

Es sind bereits zahlreiche Verfahren bekannt, um die Erstarrung von Beton durch verschiedenste chemische Zusätze zu beschleunigen. Weiterhin wird in der DE 100 26 022 A1 vorgeschlagen, dem Spritzbeton Kohlendioxid zuzusetzen, um die Erstarrungszeit zu verkürzen. Das Kohlendioxid wird dabei beispielsweise dem Anmach- oder Zugabewasser zugegeben.

Beim Trockenspritzverfahren wird der Druck des Anmachwassers vor dem Eintritt in die Spritzdüse mittels einer Hochdruckpumpe teilweise bis auf 80 bar erhöht. Durch den erhöhten Wasserdruck wird der Mischvorgang des Anmachwassers mit dem Zement und gegebenenfalls dem Zuschlagstoff in der Spritzdüse verbessert und die Staubbildung beim Spritzen des Betons reduziert.

Zur Verkürzung der Erstarrungszeit des Spritzbetons kann auch bei diesem Verfahren, wie in der DE 100 26 022 A1 beschrieben, dem Anmachwasser Kohlendioxid zugesetzt werden. Hierbei ist es günstig, möglichst viel Kohlendioxid in dem Wasser zu lösen. Wird allerdings dem Anmachwasser soviel gasförmiges Kohlendioxid zugeführt, dass sich ein Teil des Kohlendioxids nicht in dem Anmachwasser löst, sondern in Form von Gasblasen mit dem Anmachwasser mitgerissen wird, so besteht die Gefahr, dass die Gasblasen beim Eintritt in die Hochdruckpumpe zu Verstopfungen beziehungsweise Betriebsstörungen oder Beschädigungen der Pumpe führen.

Aufgabe vorliegender Erfindung ist es daher, ein Verfahren der eingangs genannten Art bereitzustellen, bei dem die beschriebenen Nachteile vermieden werden.

Diese Aufgabe wird durch ein Verfahren zum Trocken- oder Feuchtspritzen von zementhaltigen Stoffen, insbesondere Spritzbeton, gelöst, wobei Zement und Anmachwasser einer Spritzdüse zugeführt und gemischt werden und der entstehende Spritzbeton verspritzt wird, wobei der Druck des Anmachwassers stromaufwärts der Spritzdüse mittels einer Pumpe erhöht wird, und wobei dem Anmachwasser Kohlendioxid zugesetzt wird, wobei die Menge des dem Anmachwasser zugesetzten Kohlendioxids in Abhängigkeit von Temperatur, Druck und / oder Menge des der Spritzdüse zugeführten Anmachwassers geregelt wird.

Die in dem Anmachwasser lösliche Menge an Kohlendioxid hängt von der Temperatur, dem Druck und der Menge beziehungsweise dem Durchsatz des Anmachwassers ab. Es wurde nun festgestellt, dass bei der Verwendung von Anmachwasser aus einem konventionellen Wasserversorgungssystem, beispielsweise aus dem örtlichen Wasserleitungsnetz, Druck- und Temperaturschwankungen im Anmachwasser auftreten, die die Löslichkeit des Kohlendioxids beeinflussen. Solche Schwankungen können dazu führen, dass dem Anmachwasser mehr Kohlendioxid zugesetzt wird, als unter den gegebenen Bedingungen in dem Anmachwasser lösbar ist. Als Folge treten in dem Anmachwasser Kohlendioxid-Gasblasen auf, die in der stromabwärtigen Pumpe zu Verstopfungen, Fehlfunktionen oder Schäden führen können.

Erfindungsgemäß wird deshalb das Kohlendioxid in Abhängigkeit von der Temperatur, dem Druck und / oder der pro Zeiteinheit mit Kohlendioxid zu versetzenden Menge an Anmachwasser zudosiert. Vorzugsweise wird der Kohlendioxid-Durchsatz, das heißt die pro Zeiteinheit dem Anmachwasser zugeführte Menge an Kohlendioxid, in Abhängigkeit von allen drei Größen - Temperatur, Druck und Menge des Anmachwassers - geregelt und an auftretende Druck- oder Temperaturschwankungen des Anmachwassers angepasst. Gasblasen, die aus nicht gelöstem Kohlendioxid herrühren, können so wirkungsvoll vermieden werden.

Vorzugsweise wird neben der Kohlendioxidmenge auch der Druck des dem Anmachwasser zugesetzten Kohlendioxids in Abhängigkeit von Temperatur, Druck und Menge des der Spritzdüse pro Zeiteinheit zugeführten Anmachwassers geregelt. Es hat sich nämlich gezeigt, dass durch geeignete Anpassung des Kohlendioxiddrucks die Durchmischung des zugeführten Kohlendioxids mit dem Anmachwasser verbessert und damit die Menge an in dem Anmachwasser gelösten Kohlendioxid gesteigert werden kann.

Von Vorteil wird dem Anmachwasser pro Zeiteinheit ein vorgegebener Prozentsatz, bevorzugt 50 bis 95 %, besonders bevorzugt 70 bis 90 % der unter den gegebenen Bedingungen maximal in dem Anmachwasser lösbaren Menge an Kohlendioxid zugesetzt. In Abhängigkeit von Druck, Temperatur und Durchfluss des Anmachwassers werden die zudosierte Menge an Kohlendioxid, und bevorzugt auch der Druck des Kohlendioxids, so geregelt, dass ein vorgegebenes Verhältnis von zugeführter Kohlendioxidmenge zu maximal lösbarer Kohlendioxidmenge vorliegt. Beispielsweise wird vorgegeben, dass 90% der Kohlendioxidmenge, die in dem Anmachwasser maximal lösbar wäre, dem Anmachwasser zugesetzt wird. So wird sichergestellt, dass auch bei nicht völlig homogener Durchmischung des Kohlendioxids mit dem Anmachwasser die gesamte Kohlendioxidmenge in dem Anmachwasser gelöst wird. Treten während des Spritzvorgangs Temperatur- und Druckschwankungen im Anmachwasser auf, so dass mehr Kohlendioxid in dem Anmachwasser lösbar wäre, so wird die Kohlendioxidmenge erhöht, um die beschleunigte Erstarrung weiterhin zu gewährleisten. Das Trocken- oder Feuchtspritzverfahren wird dadurch so geregelt, dass unter den gegebenen Bedingungen der verspritzte Spritzbeton möglichst schnell erstarrt, wobei aber die erwähnte Sicherheitsspanne zur Vermeidung von Gasblasen in dem Anmachwasser dennoch eingehalten wird.

Temperatur, Druck und/oder Menge des der Spritzdüse zugeführten Anmachwassers werden in einer bevorzugten Ausführung gemessen und zur Bestimmung der dem Anmachwasser zuzuführenden Kohlendioxidmenge herangezogen.

Vorzugsweise wird das Anmachwasser auf eine Temperatur von weniger als 5°C, bevorzugt weniger als 3°C, besonders bevorzugt weniger als 2°C abgekühlt. Wird das Anmachwasser einem üblichen Wasserversorgungsnetz entnommen, so besitzt es in der Regel eine Temperatur zwischen 8 und 10°C. In einer bevorzugten Ausführungsform der Erfindung wird nun die Temperatur des Wassers zur Erhöhung der Löslichkeit von CO₂ nach der Druckerhöhung auf weniger als 5°C, bevorzugt weniger als 3°C, besonders bevorzugt weniger als 2°C abgesenkt.

Dem Anmachwasser kann gasförmiges oder flüssiges Kohlendioxid zugesetzt werden, wobei von Vorteil flüssiges Kohlendioxid eingesetzt wird.

Es ist weiterhin von Vorteil, dem Zement oder vorzugsweise dem Anmachwasser Zuschlagstoffe zuzusetzen. Hierbei kommen insbesondere Beschleuniger in flüssiger oder fester Form in Betracht. Auch Sand, Kies, Schlacke, Flugasche und / oder synthetische Stoffe können als Zuschlagstoffe zugegeben werden.

Die Menge des in dem Anmachwasser lösbaren Kohlendioxid wird stark von der Durchmischung des Kohlendioxids mit dem Anmachwasser beeinflusst. Es ist daher günstig, das Anmachwasser und das Kohlendioxid in einer Mischeinrichtung zu vermischen. Dies kann zum einen durch getrennte Zuführung des Anmachwassers und des Kohlendioxids zu der Mischeinrichtung erfolgen, wobei das Anmachwasser und das Kohlendioxid in der Mischeinrichtung miteinander in Kontakt gebracht werden. Das Kohlendioxid kann dem Anmachwasser aber auch stromaufwärts der Mischeinrichtung zugegeben werden, wobei dann in der Mischeinrichtung noch nicht gelöste Kohlendioxid-Gasblasen in dem Anmachwasser gelöst werden.

Als Mischeinrichtung werden bevorzugt geeignete Strömungselemente eingesetzt, die eine Verwirbelung des Anmachwassers bewirken. Hierfür können beispielsweise Strömungselemente mit definierten Abrisskanten vorgesehen werden. Prinzipiell können auch statische Mischer verwendet werden, wobei jedoch allgemein darauf zu achten ist, dass der Druckabfall über der Mischeinrichtung möglichst gering ist.

Von Vorteil ist eine weitere Mischeinrichtung vorgesehen, welche das bereits mit Kohlendioxid versetzte Anmachwasser durchläuft. Auf diese Weise wird sichergestellt, dass das zugegebene Kohlendioxid vollständig in dem Anmachwasser gelöst ist.

Vor Einspeisung des Kohlendioxids in das Anmachwasser wird der Druck des Anmachwassers günstigerweise auf einen Wert zwischen 10 und 15 bar erhöht. Nach Zuführung des Kohlendioxids wird von Vorteil der Druck des Anmachwassers weiter erhöht, so dass sich ein Enddruck von mehr als 30 bar, bevorzugt mehr als 50 bar, besonders bevorzugt mehr als 75 bar einstellt.

Die Vorteile der Erfindung kommen auch beim Starten und Stoppen des Spritzvorgangs, das heißt beim Ein- und Ausschalten der Spritzdüse, zum Tragen. Sobald die Wasserzufuhr unterbrochen oder reduziert wird, wird die Kohlendioxidzufuhr zu dem Anmachwasser entsprechend reduziert. Dem Anmachwasser wird so stets die gewünschte Kohlendioxidmenge zugesetzt.

Durch die erfindungsgemäße Zugabe von Kohlendioxid zum Anmachwasser kann der Anteil an Erstarrungsbeschleunigern deutlich reduziert werden. Als wesentlicher Vorteil dieses Verfahrens ist die preisgünstige Herstellung von Spritzbeton zu nennen. Daneben weist die Erfindung weitere Vorteile auf: Der Beton besitzt eine höhere Endfestigkeit und die Emissionswerte der Stollenwasser weisen geringere Al-Werte und einen niedrigeren pH-Wert auf. Die Arbeitsbedingungen für die mit dem Spritzen des Spritzbetons befasste Spritzmannschaft werden verbessert.

Die Erfindung soll im Folgenden anhand eines Beispiels nochmal erläutert werden. Bei einer typischen Anwendung des erfindungsgemäßen Verfahrens werden 6 m³/h Spritzbeton hergestellt. Hierzu werden pro Stunde 600 Liter Anmachwasser eingesetzt, das unter einem Druck von 10 bar und mit einer Temperatur von 12°C zur Verfügung steht. Unter diesen Druck- und Temperaturbedingungen sind maximal 22 g Kohlendioxid pro Liter Wasser löslich.

Es soll sichergestellt werden, dass das gesamte zugegebene Kohlendioxid in dem Anmachwasser gelöst wird. Zudem wird eine Sicherheitsspanne berücksichtigt und die Kohlendioxidzugabe auf 90 % der maximal löslichen Menge begrenzt, das heißt, bei den genannten Bedingungen, 12°C und 10 bar, werden 20 g Kohlendioxid pro Liter Anmachwasser, entsprechend 12 kg/h, zudosiert.

Fällt der Wasserdruck während der Spritzbetonherstellung auf 9 bar ab, so würde bei gleichbleibender Kohlendioxid-Dosierung die maximale Löslichkeitsgrenze überschritten, da bei einem Druck von 9 bar und einer Temperatur von 12°C die Löslichkeitsgrenze nur etwa 19 g Kohlendioxid pro Liter Wasser beträgt. Folglich würden in dem Anmachwasser ungelöste Kohlendioxid-Gasblasen verbleiben.

Erfindungsgemäß werden daher Druck und Temperatur des Anmachwassers gemessen und die Kohlendioxidzugabe wird entsprechend diesen Werten geregelt. Im vorliegenden Beispiel wird bei einem Druckabfall von 10 auf 9 bar die zugegebene Kohlendioxidmenge auf etwa 17 g/l emiedrigt werden, so dass die relative Kohlendioxidzugabe von 90 % des Maximalwertes gewährleistet bleibt. Dies bedeutet, dass der Kohlendioxid-Durchsatz von 12 kg/h auf etwa 10 kg/h abgesenkt wird.

## Patentansprüche

1. Verfahren zum Trocken- oder Feuchtspritzen von zementhaltigen Stoffen, insbesondere Spritzbeton, wobei Zement und Anmachwasser einer Spritzdüse zugeführt und gemischt werden und der entstehende Spritzbeton verspritzt wird, wobei dem Anmachwasser Kohlendioxid zugesetzt wird und der Druck des Anmachwassers stromaufwärts der Spritzdüse mittels einer Pumpe erhöht wird, **dadurch gekennzeichnet, dass** die Menge des dem Anmachwasser pro Zeiteinheit zugesetzten Kohlendioxids in Abhängigkeit von Temperatur, Druck und /oder Menge des der Spritzdüse pro Zeiteinheit zugeführten Anmachwassers geregelt wird.

2. Verfahren nach Anspruch 1, **dadurch gekennzeichnet, dass** der Druck des dem Anmachwasser zugesetzten Kohlendioxids in Abhängigkeit von Temperatur, Druck und Menge des der Spritzdüse pro Zeiteinheit zugeführten Anmachwassers geregelt wird.

3. Verfahren nach einem der Ansprüche 1 oder 2, **dadurch gekennzeichnet, dass** dem Anmachwasser pro Zeiteinheit ein vorgegebener Prozentsatz, vorzugsweise 50 bis 95 %, besonders bevorzugt 70 bis 90 %, der unter den gegebenen Bedingungen maximal in dem Anmachwasser lösbaren Menge an Kohlendioxid zugesetzt wird.

4. Verfahren nach einem der Ansprüche 1 bis 3, **dadurch gekennzeichnet, dass** Temperatur, Druck und/oder Menge des der Spritzdüse zugeführten Anmachwassers gemessen werden.

5. Verfahren nach einem der Ansprüche 1 bis 4, **dadurch gekennzeichnet, dass** gasförmiges oder flüssiges Kohlendioxid dem Anmachwasser zugesetzt wird.

6. Verfahren nach einem der Ansprüche 1 bis 5, **dadurch gekennzeichnet, dass** das Kohlendioxid dem Anmachwasser in einer Mischeinrichtung und / oder stromaufwärts einer Mischeinrichtung zugesetzt wird.

7. Verfahren nach einem der Ansprüche 1 bis 6, **dadurch gekennzeichnet, dass** der Druck des Anmachwassers, nachdem das Kohlendioxid dem Anmachwasser zugesetzt wurde, auf mehr als 30 bar, bevorzugt mehr als 50 bar, besonders bevorzugt mehr als 75 bar erhöht wird.

8. Verfahren nach einem der Ansprüche 1 bis 7, **dadurch gekennzeichnet, dass** dem Anmachwasser und / oder dem Zement Zuschlagstoffe zugesetzt werden.

9. Verfahren nach Anspruch 8, **dadurch gekennzeichnet, dass** als Zuschlagstoff Sand, Kies, Schlacke, Flugasche und / oder synthetische Stoffe eingesetzt werden.
